Europäisches Patentamt

European Patent Office

Office européen des brevets

(19)

(11) Publication number: **0 249 660**
**B1**

## EUROPEAN PATENT SPECIFICATION

(12)

(45) Date of publication of the patent specification:
18.04.90

(51) Int. Cl.⁴: **C09K 11/79, G21K 4/00**

(21) Application number: **86201041.0**

(22) Date of filing: **16.06.86**

(54) A process for the conversion of x-rays.

(43) Date of publication of application:
**23.12.87 Bulletin 87/52**

(45) Publication of the grant of the patent:
**18.04.90 Bulletin 90/16**

(84) Designated Contracting States:
**BE DE FR GB**

(56) References cited:
**CHEMICAL ABSTRACTS, vol. 96, no. 14, April 1982,
page 619, abstract no. 113318k, Columbus, Ohio, US; &
JP-A-81 155 283 (TOSHIBA CORP.) 01-12-1981
CHEMICAL ABSTRACTS, vol. 94, no. 2, January 1981,
page 562, abstract no. 23884w, Columbus, Ohio, US; &
JP-A-80 69 687 (TOKYO SHIBAURA ELECTRIC CO.,
LTD) 26-05-1980**

(73) Proprietor: **AGFA-GEVAERT naamloze vennootschap,
Septestraat 27, B-2510 Mortsel(BE)**

(72) Inventor: **Lammers, Marinus Jacobus, Otterwelde 51,
3437 WD Nieuwegein(NL)**
Inventor: **Blasse, George, Kennedylaan 36, 3981 GC
Bunnik(NL)**
Inventor: **Terrell, David Richard, Diependaele 4,
B-2548 Lint(BE)**
Inventor: **Neyens, Lodewijk Marie, Dries 11,
B-2550 Kontich(BE)**
Inventor: **de Jaeger, Nikolaas Cyriel, Hoverheide 35,
B-2540 Hove(BE)**

## Description

The present invention relates to a process for the conversion of X-rays into visible light.

It is well known that X-rays can cause appropriate substances to luminesce. Substances showing the phenomenon of luminescence under the influence of X-rays are commonly called phosphors.

For the production of radiographs in conjunction with photographic silver halide emulsion materials these phosphors are used in a supported or self-supporting binder layer forming an X-ray conversion screen.

The phosphors used in said screens should be luminescent but not exhibit appreciable long lived emission after the X-ray source is switched off. If a screen with marked-long lived emission were to be used, it would retain its image after the X-ray beam had ceased and a fresh film contacted with it would gain a so-called ghost impression that would interfere with the next image to be made. This phenomenon is also known under the term "after-glow".

There are thousands of phosphor materials having photoluminescent properties under activation by ultra-violet light, but the emission of visible light by ultra-violet light exposure gives no indication about a possible degree of absorption of X-rays and the conversion efficiency of absorbed X-rays into light.

To be useful in medical X-ray diagnosis the phosphor used in an X-ray conversion screen also called intensifying screen should be capable of a bright and intensive emission to enable the operator to work with a low dose of X-rays not harmful to the patient.

For that purpose the phosphor must stop X-rays effectively and must convert efficiently the absorbed X-ray radiation into visible or near visible light. Thus a practically useful phosphor should have both a high X-ray absorption capacity and a high X-ray conversion efficiency.

A survey of phosphors for use in medical X-ray conversion screens is given by A. L. N. Stevels in the bulletin Medica Mundi, 20, (1975) No. 1, p. 1-22.

From the published German Patent Application (DE-OS) 2 816 069 it is known how to prepare green-light emitting Tb and Ce-activated rare earth silicate phosphors useful in fluorescent lamps, wherein ultra-violet light stimulates the emission of green fluorescent light, but no indication has been given with respect to the use of said phosphor for the conversion of X-rays into visible light.

From the paper of Leskela et al., [J. Less-Common Metals, 112 (1985) 71-74] it is known how to prepare $Y_2SiO_5$ and $Gd_2SiO_5$ phosphors simultaneously doped with terbium and cerium for use in fluorescent lamps, but again no indication has been given with respect to the use of said phosphors for the conversion of X-rays into visible light.

It is an object of the present invention to provide a process for the conversion of X-rays very efficiently into green light without appreciable after-glow using a particular rare-earth metal silicate phosphor.

It is another object of the present invention to use said phosphor in a binder layer of an X-ray conversion screen suitable for use in radiography with green-sensitized silver halide emulsion materials.

Other objects and advantages of the present invention will appear from the further description.

In accordance with the present invention there is provided a process for the conversion of X-rays into green light with a phosphor which on exposure to X-rays emits light the spectrum of which is dominated by a group of higher intensity lines occurring between 530 and 570 nm, characterized in that said phosphor comprises a silicate of gadolinium activated with terbium, the atomic percentage of terbium substituted for gadolinium being in the range from 0.6 to 7.5, and the silicate consisting for at least 90 mole % of the oxyorthosilicate.

The terminology "silicate of gadolinium" includes : gadolinium oxyorthosilicate ($Gd_2(SiO_4)O$ or $Gd_2SiO_5$), gadolinium orthosilicate of the formula [$\square_{0.67}Gd_{9.33}(SiO_4)_6O_2$] and gadolinium pyro- or diorthosilicate ($Gd_2Si_2O_7$). The silicates may be mixed with gadolinium oxide ($Gd_2O_3$), the content of the latter preferably not exceeding 56 mole %.

The silicate content of said phosphor consists preferably for at least 96 mole % of the oxyorthosilicate.

According to a preferred embodiment the phosphor is activated with trivalent terbium in an atomic percentage in the range from 0.7 to 6.5 with respect to its total rare earth metal concentration and the $Gd_2O_3:SiO_2$ molar ratio used in its preparation is from 1.0 to 2.0.

To obtain a particular high X-ray conversion into green light the preferred Tb concentration is in the range from 0.8 to 6.0 atomic percentage with respect to the total rare earth metal content and the preferred $Gd_2O_3/SiO_2$ molar ratio used in the preparation is in the range from 1.03 to 1.70.

The brightest and most efficient X-ray conversion into green light is obtained with a said phosphor wherein terbium is used in a 3.6 % atomic percentage with respect to total gadolinium and terbium content and the $Gd_2O_3$ to $SiO_2$ molar ratio used in its preparation is 1.08:1.

The phosphors used in the X-ray conversion screens according to the present invention have a particularly good chemical stability and their emission power is practically not reduced by moisture and oxygen of the air.

The invention is illustrated by accompanying drawings in which :

Figure 1 represents the relative energy (R.E.) versus wavelength (nm) curve of fluorescent light emitted by the phosphor prepared according to Example 1 when using X-ray excitation.

Figure 2 represents a curve relating to percental emission intensity (P.E.I.) for the 542 nm emission band versus atom % of Tb in phosphors obtained according to Examples 1 to 8. The emission value of the phosphor prepared according to Example 1 being arbitrarily given the value 100.

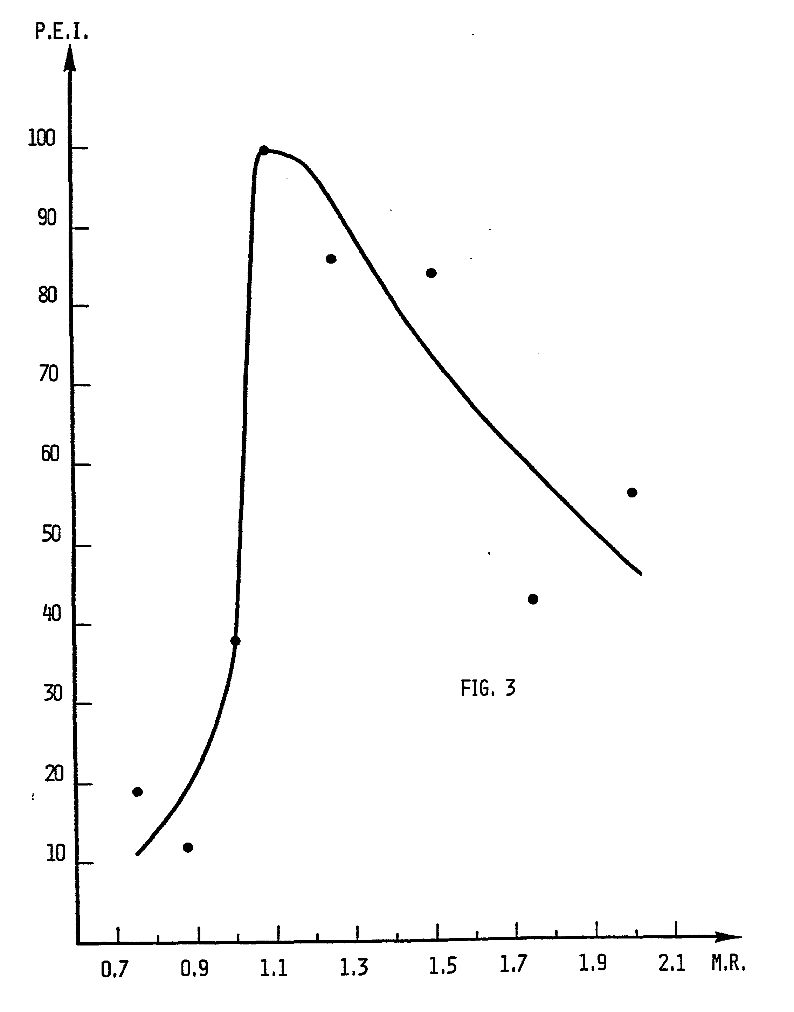

Figure 3 represents a curve relating to percental emission intensity (P.E.I.) for the 542 nm emission band versus molar ratio (M.R.) of $Gd_{1.928}Tb_{0.072}O_3/SiO_2$ of phosphors used according to the present invention.

The preparation of phosphor compounds for use according to the present invention may proceed via wet mixing or dry mixing techniques, with or without using a flux in the firing, with one or more firings at temperatures between about 1,000 and about 1,500 °C. At least one of the firings must take place in a reducing atmosphere to convert $Tb^{4+}$ into $Tb^{3+}$. Efficient mixing of the ingredients is extremely important, if the gadolinium orthosilicate concentration is to be minimized, whether by wet or dry techniques.

The ingredients being mixed may be in different forms. Terbium, for example, may be introduced as a coprecipitated oxalate, doped gadolinium oxide, terbium oxide or as terbium oxalate. Gadolinium, for example, may be introduced as a coprecipitated oxalate with terbium, as an oxide doped with terbium, as gadolinium oxalate or as gadolinium oxide (in particular form or as a mixture of forms). Silicon may, for example, be introduced as colloidal silica (silica gel), flame pyrolized silica, silicic acid and/or as a silane, e.g. tetraethoxy silane. As flux, LiF has been found to be particularly beneficial.

Detailed preparation techniques are given hereinafter in Examples 1 to 18.

EXAMPLE 1

10 ml of ethanol were added to 3.3278 g of gadolinium oxide (containing 5.84 wt.% water) and 0.2113 g of $Tb_2(C_2O_4)_3.4.34\ H_2O$ and mixed for 10 min in a planetary ball-mill. After drying 3.3664 g of the obtained mixture were added to 30 ml of water, 0.5466 g of colloidal silica AEROSIL 380 (trade name of DEGUSSA, Bundesrepublik-Germany), having an average primary particle size of 7 nm and water content of 12.7 wt %, and 61 mg of lithium fluoride. The obtained mixture was heated to 60 °C and stirred vigorously for 30 minutes. After drying at 150 °C for 16 hours, the mixture was fired at 1100 °C in a $N_2/H_2$ (volume ratio 3:1) atmosphere for 16 hours in an alumina crucible in a tube furnace. The sample was heated up herein to 1100 °C at a rate of 200 °C/h. After cooling, the sample was ground in a planetary ball mill and fired for 2 h at 1200 °C in a 98.7 wt % $N_2$/1.3 wt % $H_2O$ atmosphere. After cooling and further grinding in a planetary ball mill it was further fired for 2.5 h in a $N_2/H_2$ (volume ratio 3:1) atmosphere at 1200 °C.

The resulting phosphor contained 3.6 atom % of terbium and consisted as defined by X-ray diffraction spectrography (XRD) of a mixture containing 82.8 mole % of of gadolinium oxyorthosilicate, 2.8 mole % of gadolinium orthosilicate and 14.4 mole % of $Gd_2O_3$. The specific gravity of gadolinium oxyorthosilicate is 6.8 g/cm3. The gadolinium oxide/silica ratio, i.e. $Gd_2O_3/SiO_2$ molar ratio used in this preparation was 1.08 : 1.

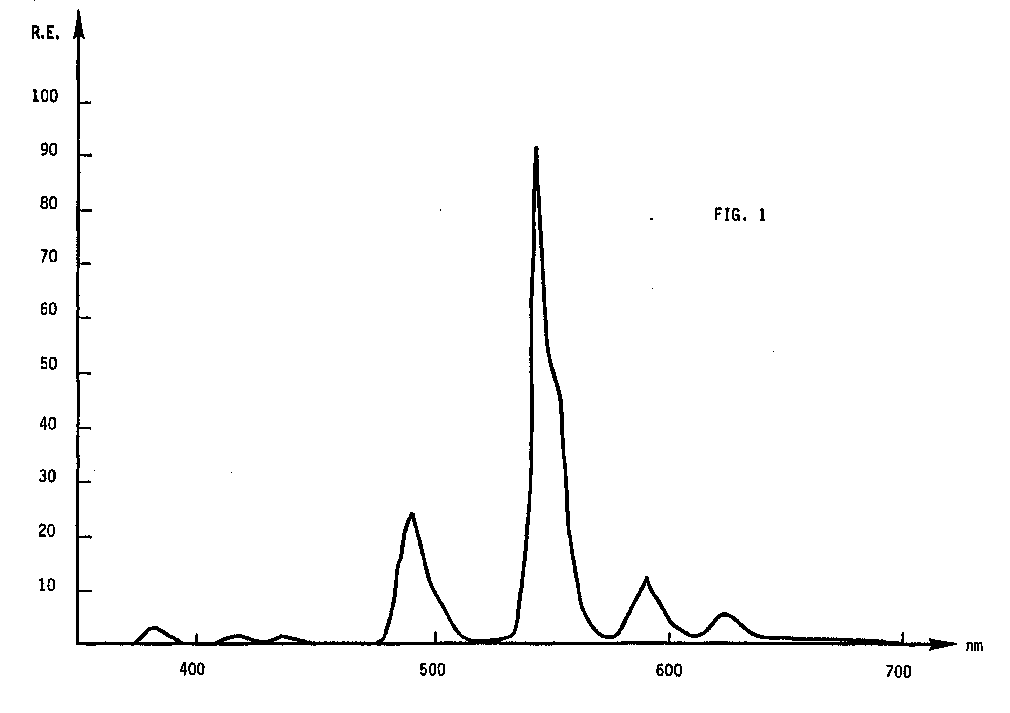

Figure 1 represents the relative energy (R.E.) versus wavelength (nm) curve, of the phosphor prepared according to Example 1. The excitation proceeded with X-rays of 100 kV.

EXAMPLES 2 to 8

Following a similar procedure to the sample preparation described in Example 1 phosphor particles were prepared mainly consisting of gadolinium oxyorthosilicate containing terbium (III) ions expressed in atom % with respect to the combined content of gadolinium and terbium. The percental emission intensities (P.E.I.) of the 550 nm band are indicated in the following Table 1. The emission intensity of the phosphor prepared according to Example 1 is given arbitrarily the value 100.

In all the Examples 2 to 8 the actual molar $Gd_2O_3:SiO_2$ ratio used in the preparation was 1.08:1.

TABLE 1

| Example No. | Tb atom % | orthosilicate mole % | $Gd_2O_3$ mole % | P.E.I. at 550 nm |
|---|---|---|---|---|
| 2 | 0.1 | 2.4 | 3.3 | 11 |
| 3 | 0.6 | 3.1 | 5.6 | 50 |
| 4 | 1.0 | 1.1 | 0.0 | 87 |
| 5 | 2.4 | 2.2 | 8.0 | 90 |
| 1 | 3.6 | 2.8 | 14.4 | 100 |
| 6 | 6.0 | 2.8 | 13.3 | 82 |
| 7 | 7.1 | 3.5 | 7.8 | 53 |
| 8 | 9.5 | 5.4 | 10.8 | 46 |

EXAMPLES 9 to 15

Following a similar procedure as described in Example 1 phosphor particles were prepared wherein the terbium (III) content was 3.6 atom % with respect to the combined content of gadolinium and terbium but with varying molar ratios of Tb(III) doped gadolinium sesquioxide ($Gd_{1.928}Tb_{0.072}O_3$) to silica ($SiO_2$).

The percental emission intensities (P.E.I.) of the 550 nm band are listed in the following Table 2 in comparison with the emission intensity of the phosphor obtained according to Example 1, the P.E.I. value of which is arbitrarily given the value 100.

TABLE 2

| Example No. | $Gd_{1.934}Tb_{0.066}/SiO_2$ molar ratio | P.E.I. | orthosilicate mole % | $Gd_2O_3$ mole % |
|---|---|---|---|---|
| 9 | 2:1 | 56 | 0 | 50 |
| 10 | 1.75:1 | 43 | 0 | 47 |
| 11 | 1.50:1 | 84 | 0 | 34 |
| 12 | 1.25:1 | 86 | 0 | 20 |
| 1 | 1.08:1 | 100 | 2.8 | 14.4 |
| 13 | 1.000:1 | 38 | 65.0 | 0 |
| 14 | 0.875:1 | 12 | 100.0 | 0 |
| 15 | 0.75:1 | 19 | 100.0 | 0 |

EXAMPLE 16

4.00080 g of $Gd_{1.98}Tb_{0.02}(C_2O_4)_3.4.43 H_2O$, 0.36880 g AEROSIL 380 (trade name for colloidal silica) and 0.09002 mg of LiF were mixed in 30 ml of water for 1 h at 75 °C. After drying at 120 °C overnight in air, the mixture was fired at 1400 °C in air for 3 h (heating up rate 5 °C/min). After cooling and grinding with pestle in mortar the same was fired again for 2 h at 1200 °C in a reducing atmosphere consisting of 5 vol % of hydrogen and 95 vol % of nitrogen.

The composition of the thus obtained phosphor emitting green light with X-ray excitation was $Gd_{1.98}Tb_{0.02}SiO_5$ in admixture with 2.7 mole % of $\square_{0.67}Gd_{9.33}(SiO_4)_6O_2$ and 15.8 mole % of $Gd_2O_3$. The $Gd_2O_3/SiO_2$ molar ratio used was 1.125 : 1.

Upon irradiation of the sample with a 100 kV X-ray source it exhibited an emission from the 550 nm band measured with a spectrofluorimeter which was 61 % lower than that observed with a sample prepared according to Example 1.

EXAMPLE 17

4.00025 g of $Gd_{1.98}Tb_{0.02}(C_2O_4)_3.4.43 H_2O$ and 0.35389 g of SYLOID 72 (trade name of Grace Industries U.S.A. for colloidal silica), containing 9.08 wt % of water, was mixed in a planetary ball mill with 10 ml of ethanol to obtain a slurry and the ethanol evaporated off before firing the sample at 1400 °C in air for 3 h at an heating up rate of 5 °C/min. After cooling and grinding with pestle in mortar the sample was fired again for 2 h at 1200 °C in a reducing atmosphere consisting of 5 vol % of hydrogen and 95 vol % of nitrogen.

The composition of the thus obtained phosphor emitting green light with X-ray excitation was $Gd_{1.98}Tb_{0.02}SiO_5$ in admixture with 3.3 mole % of $\square_{0.67}Gd_{9.33}(SiO_4)_6O_2$ and 17.3 mole % of $Gd_2O_3$. The $Gd_2O_3/SiO_2$ molar ratio used was 1.125 : 1.

Upon irradiation of the sample with a 100 kV X-ray source it exhibited a relative emission from the 550 nm band (measured with spectrofluorimeter) which was 34 % of that observed with the phosphor obtained according to Example 1.

Example 18

3.36223 g of $Gd_2O_3$ (containing 5.84 wt % of water) and 0.1412 g of $Tb_2(C_2O_4)_3.4.34 H_2O$ were thoroughly mixed for 10 min with 10 ml of ethanol in a ball-mill. After drying the mixture was fired for 2 h at 1200 °C in air in an alumina crucible. The yield was 3.1714 g of $Gd_2O_3$:Tb. Said substance was mixed with 0.5168 g of colloidal $SiO_2$ (AEROSIL 380 - trade name) containing 12.7 wt % of water, and 0.065 g of LiF by stirring for 2 h in 30 ml of water at 50 °C. After drying at 150 °C for 16 h in a nitrogen atmosphere, the mixture was fired at 1100 °C in a $N_2/H_2$ (volume ratio 3 : 1) atmosphere for 15 h. The heating was performed slowly, i.e. from room temperature up to 800 °C at a heating rate of 3.3 °C/min, from 800 °C to 1100 °C at a heating rate of 1.1°C/min. After 15 h of firing at 1100 °C, the $N_2/H_2$ atmosphere was replaced by an atmos-

4

phere of wet nitrogen for 1 h. After this treatment the sample was cooled down to room temperature in a $N_2/H_2$ (volume ratio 3 : 1) atmosphere. The composition of the obtained phosphor sample emitting green light with X-ray excitation was $Gd_{1.947}Tb_{0.053}SiO_5$ in admixture with 0.6 mole % of $\square_{0.67}Gd_{9.33}(SiO_4)_6O_2$ and 8.0 mole % of $Gd_2O_3$. The actual gadolinium oxide/silica, i.e. $Gd_2O_3/SiO_2$ molar ratio used in the preparation was 1.16:1.

Upon irradiation of the sample with 100 kV X-ray source it exhibited an emission from the 550 nm band measured with a spectrofluorimeter which was 17 % lower than that observed with the sample prepared according to example 1.

An X-ray conversion screen according to the present invention consists essentially of a phosphor dispersed in particulate form in a supported or self-supporting binder layer, wherein the binder is of organic nature and wherein said phosphor comprises a silicate of gadolinium activated with terbium, the atomic percent of terbium substituted for gadolinium being between 0.6 to 7.5, and the silicate consists for at least 90 mole % of the oxyorthosilicate. The silicate content consists preferably for at least 96 mole % of the oxyorthosilicate.

For use in the production of X-ray conversion screens according to the present invention the phosphor particles have preferably a size in the range of 0.1 to 20 um, preferably in the range of 1 to 20 um.

The grain size can be adjusted after firing and cooling by grinding, e.g. in a ball-mill.

The present invention includes a method for recording of information wherein the X-ray conversion screen according to the present invention is exposed image-wise to X-rays and the light emitted thereby is received by a photon-detection means, e.g. a photo-cathode emitting electrons when struck by visible light, a photoconductor obtaining increased electrical conductivity or a photochemical detector, e.g. photosensitive silver halide grains making part of a photographic silver halide emulsion layer material for forming therein by development a visible image.

The screens of the present invention are particularly suited for use in the X-ray range which extends from about 50 keV to 150 keV.

Suitable binders for forming a binder layer incorporating said phosphors in dispersed form are film forming organic polymers, e.g., a cellulose acetate butyrate, polyalkyl (meth)acrylates, e.g. polymethyl methacrylate, a polyvinyl-n-butyral e.g. as described in the United States Patent Specification 3,043,710, a copoly(vinyl acetate/vinyl chloride) and a copoly(acrylonitrile/butadiene/styrene) or a copoly(vinyl chloride/vinyl acetate/vinyl alcohol) or mixture thereof.

To provide high X-ray emission it is preferable that a minimum amount of binder be employed to form the X-ray conversion screen, so that the fluorescent layer of the screen substantially consists of phosphor particles dispersed in the binder. However, a very small amount of binding agent may result in a too brittle layer, so a compromise has to be made.

The thickness of a supported phosphor layer is preferably in the range of 0.05 to 0.5 mm.

The coverage of the phosphor is preferably in the range from about 300 to 750 g/m2.

For the preparation of the X-ray conversion screen, also called phosphor screen or fluorescent screen, the phosphor particles are intimately dispersed in a solution of the binder and then coated on a support and dried.

The coating of the present phosphor binder layer may proceed according to any usual technique, e.g. by spraying, dip-coating or doctor blade coating. After coating, the solvent(s) of the coating mixture is (are) removed by evaporation, e.g. by drying in an air current of 60°C.

An ultrasonic treatment can be applied to improve the packing density and to perform the de-aeration of the phosphor-binder combination. Before the optional application of a protective coating the phosphor-binder layer may be calendered to improve the packing density (i.e. the number of grams of phosphor per cm3 of dry coating).

In preparing an X-ray conversion screen according to the present invention the phosphor-binder composition may be coated on a wide variety of supports, e.g. cardboard and plastic film, e.g. polyethylene terephthalate film. The supports used in the fluorescent screens of the present invention may be coated with (a) subbing layer(s) for improving the adherence of the phosphor coating thereto.

Optionally, a light-reflecting layer is provided between the phosphor-containing layer and its support to enhance the light-output e.g. for exposure of a silver halide emulsion material. Such a light-reflecting layer may contain white pigment particles dispersed in a binder, e.g. titanium dioxide particles, or may be made of a vapour-deposited metal layer, e.g. an aluminium layer having a high reflection power for ultraviolet radiation and blue light.

The image sharpness obtainable with an imaging system consisting of a an X-ray conversion screen according to the present invention and a photographic silver halide material can be improved considerably by incorporating a fluorescent light-absorbing dye, called "screening dye", into the fluorescent screen material. As oblique radiation has a longer path in the screen material, it is attenuated by the screening dye or dyes to a greater extent than the radiation impinging normally. The term "screening dye" used herein includes dyestuffs (i.e. coloured substances in molecularly divided form) as well as pigments.

Diffuse radiation reflecting from the support of the X-ray conversion screen can be mainly attenuated in an anti-reflection layer containing the screening dyes subjacent to the phosphor layer.

The screening dye does not have to be removed from the screen and may therefore be any dye or pigment absorbing in the emission spectrum of the phosphor. Thus black substances such as carbon black particles of an average size of 0.15 to 0.60 um incorporated in said anti-reflection layer or the phosphor layer yield quite satisfactory results.

To the phosphor layer a protective coating may be applied preferably having a thickness in the range of 5 to 25 um and comprising a film-forming polymeric material that is photographically inert towards a silver halide emulsion layer.

Polymeric materials suitable for that purpose include e.g. cellulose derivatives (e.g. cellulose nitrate, cellulose triacetate, cellulose acetate propionate, cellulose acetate butyrate), polyamides, polystyrene, polyvinyl acetate, polyvinyl chloride, silicone resins, poly(acrylic ester) and poly(methacrylic ester) resins, and fluorinated hydrocarbon resins, and mixtures of the foregoing materials. Representative examples of various individual members of these binder materials include the following resinous materials : poly(methyl methacrylate), poly(n-butyl methacrylate), poly(isobutyl methacrylate), copolymers of n-butyl methacrylate and isobutyl methacrylate, copolymers of vinylidene fluoride and hexafluoropropylene, copolymers of vinylidene fluoride and trifluorochloroethylene, copolymers of vinylidene fluoride and tetrafluoroethylene, terpolymers of vinylidene fluoride, hexafluoropropylene, and tetrafluoroethylene, and poly(vinylidene fluoride).

According to a particular embodiment the protective layer is composed of a crosslinked polymer mass obtained by an acid-catalyzed reaction of a polymer or mixture of polymers containing reactive hydrogen atoms and a crosslinking agent, the crosslinking agent being e.g. an organic compound containing a plurality of etherified N-methylol groups.

According to a preferred embodiment the outer face of the screen intended for contact with a photographic silver halide emulsion material contains a solid particulate material that has a static friction coefficient (u) at room temperature (20°C) of less than 0.50 on steel as described in the published German Patent Application 2,616,093.

Antistatic substances can be applied to the screen to reduce the risk of electrical potential differences resulting in sparking. For example, the screens are treated with the "ANTI-STAT" 6 spray, which leaves an odourless transparent antistatic deposit. ANTI-STAT is a trade name of Braun Laboratories Div. Bartt Chemical Co., Inc., Philadelphia, Pa., U.S.A.

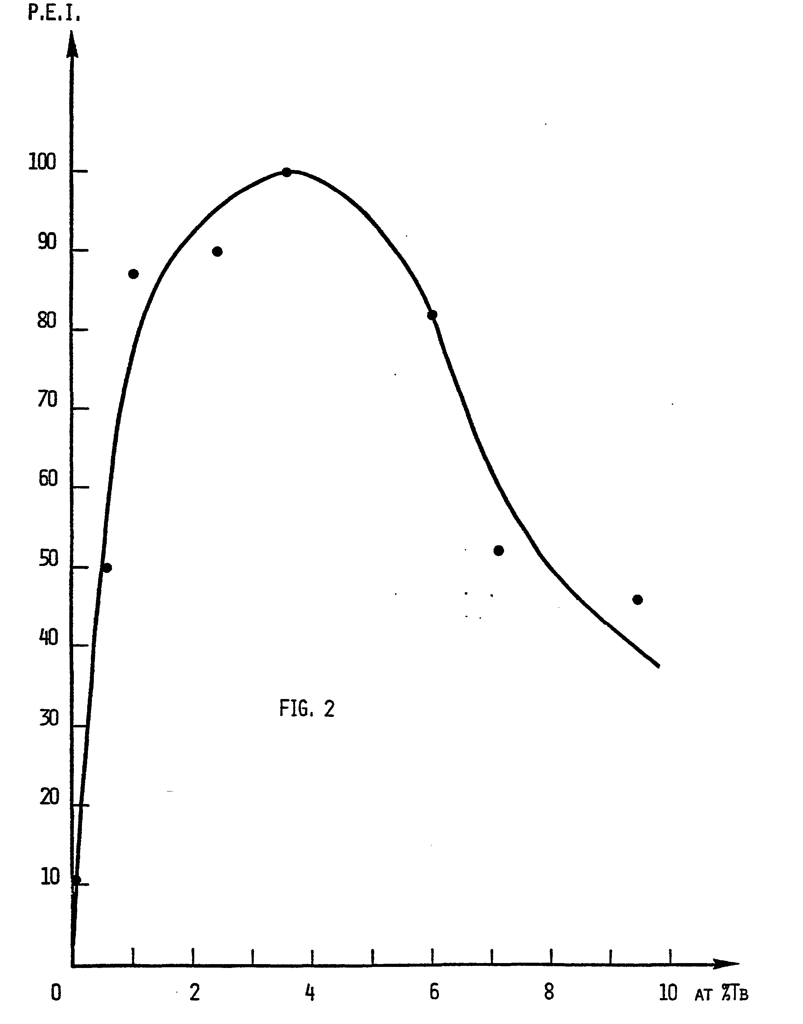

The present X-ray conversion screens may contain the above defined terbium activated gadoliniumoxysilicate phosphor particles in admixture with other phosphor particles, e.g. also green-light emitting phosphors, e.g. the oxysulphides of lanthanum, gadolinium or lutetium activated with trivalent terbium. The preparation of these phosphors proceeds e.g. as described in US-P 3,418,246, 3,418,246, 3,418,247 and 3,515,675. X-ray conversion screens containing such phosphors are described in US-P 3,725,704. Other phosphors having a strong green light emission are described in US-P 3,617,743, e.g. LaOCl:0.05Tb and LaOBr:0.05Tb:0.005Ce (see Fig. 2b and Fig. 2c of said US-Patent Specification).

A combination particularly suitable for radiography comprises two separate X-ray fluorescent screens and a photosensitive material comprising a support with a silver halide emulsion layer coated on each surface of said support, wherein each of the fluorescent screens is arranged adjacent to one of the silver halide emulsion layers as described e.g. in US-P 4,130,428. The silver halide emulsion layers are sensitized with spectral sensitizing dye(s) in such a way that the silver halide is sensitive to light in the wavelength range of 450-570 nm. The spectrally sensitized silverhalide may be present in each silver halide emulsion layer in an amount equivalent with a silver amount of less than 4 g per m2 without resulting in an objectionable "cross-over" and loss of image-sharpness as defined in said US-P 4,130,428. In a particular useful X-ray recording technique a pair of the present X-ray image conversion screens is used in a cassette and placed in direct contact with a photographic silver halide emulsion film, which being double-side emulsion coated makes contact at each of its sides with one of said screens.

In order to exclude local defects in the form of developable centres in the silver halide film used in conjunction with an X-ray image conversion screen containing rare earth-metal phosphor particles including traces of radioactive elements, the screen may contain a light-diffusing layer or sheet, which contains numerous discrete light-scattering volumes of a substance or substances distributed at random in a binder medium or partially embedded therein, such volumes having a mean size not larger than 20 um, said layer or sheet being located so that fluorescent light of said phosphor particles can penetrate therethrough and leave the screen. A screen containing said substance(s) is described in US-P 4,149,083.

According to another embodiment the X-ray image conversion screen according to the present invention is used free-standing as fluoroscopic screen for visual inspection of the fluorescent light image emitted thereby under the influence of an image-wise X-ray irradiation.

According to still another embodiment the X-ray image conversion screen according to the present invention is used in an evacuated X-ray image intensifier tube in such a way as to allow the light emitted by the conversion screen to strike a photo-cathode producing photo-electrons that after having been accelerated are used to strike a cathode-ray luminescent screen.

The following example 19 illustrates the manufacture of an X-ray conversion screen according to the present invention. All parts, percentages and ratios are by weight unless otherwise stated.

## EXAMPLE 19

A phosphor prepared according to Example 1 was dispersed in a ball mill in a 30 % solution of poly-n-butylmethacrylate as binder in toluene, the phosphor to binder ratio being 8 : 1.

Ball-milling was effected till a grind with fineness 7 NS measured with an Hedgman Grind Gage was obtained (see ASTM D 120 specifications). The average particle size of the phosphor particles in the final grind was 7 um.

After filtration and deaeration, the dispersion was coated on a polyethylene terephthalate support at a phosphor coverage of 600 g per m2.

After drying the obtained X-ray conversion screen material was introduced as a pair of screens in a common X-ray cassette. The thus obtained cassette was used for the exposure of medical radiographic film that is double side coated with a green sensitized silver halide emulsion W layer. Very satisfactory results from the viewpoint of image sharpness and speed where obtained on using the X-ray film described in Example 2 of US-P 4,130,428.

## Claims

1. A process for the conversion of X-rays into green light with a phosphor which on exposure to X-rays emits light the spectrum of which is dominated by a group of higher intensity lines occurring between 530 and 570 nm, characterized in that said phosphor comprises a silicate of gadolinium activated with terbium, the atomic percentage of terbium substituted for gadolinium being in the range from 0.6 to 7.5, and the silicate consisting for at least 90 mole % of the oxyorthosilicate.

2. A process according to claim 1 wherein the silicate content of the phosphor consists for at least 96 mole % of the oxyorthosilicate.

3. A process according to claim 1 or 2, wherein the phosphor is activated with trivalent terbium in an atomic percentage in the range of from 0.8 to 6.0 with respect to its total rare earth metal concentration, and the $Gd_2O_3/SiO_2$ molar ratio used in the phosphor preparation is from 1.03 to 1.50.

4. A process according to any of claims 1 to 3, wherein the phosphor is prepared as a mixture of said terbium activated gadolinium oxyorthosilicate ($Gd_2SiO_5$) with gadolinium oxide ($Gd_2O_3$), wherein the gadolinium oxide content does not exceed 56 mole %.

5. An X-ray conversion screen consisting essentially of a phosphor dispersed in particulate form in a supported or self-supporting binder layer wherein the binder is of organic nature, characterized in that said phosphor comprises a silicate of gadolinium activated with terbium, the atomic percentage of terbium substituted for gadolinium being in the range from 0.6 to 7.5, and the silicate consisting for at least 90 mole % of the oxyorthosilicate.

6. An X-ray conversion screen according to claim 5, wherein the silicate content of the phosphor consists for at least 96 mole % of the oxyorthosilicate.

7. An X-ray conversion screen according to claims 5 and 6, wherein the phosphor is activated with trivalent terbium in an atomic percentage in the range of 0.8 to 6.0 with respect to its total rare earth metal concentration, and the $Gd_2O_3/SiO_2$ molar ratio used in the phosphor preparation is from 1.03 to 1.70.

8. An X-ray conversion screen according to any of the claims 5 to 7, wherein the phosphor is in dispersed form in a film forming organic polymer(s).

9. An X-ray conversion screen according to any of the claims 5 to 8, wherein the phosphor in said layer is applied at a coverage in the range from 300 to 750 g/m2.

10. An X-ray conversion screen according to any of the claims 5 to 9, wherein the phosphor has a particles size in the range of 0.1 to 20 um.

## Patentansprüche

1. Verfahren zur Umwandlung von Röntgenstrahlen in grünes Licht mit einem Phosphor, der bei der Belichtung mit Röntgenstrahlen Licht aussendet, dessen Spektrum durch eine Gruppe von Linien höherer Intensität zwischen 530 und 570 nm beherrscht wird, dadurch gekennzeichnet, daß der Phosphor ein terbiumaktiviertes Gadoliniumsilikat enthält, dessen Atomverhältnis von durch Terbium substituiertes Gadolinium zwischen 0,6 und 7,5 liegt, und das Silikat zu mindestens 90 Hol-% aus dem Oxyorthosilikat besteht.

2. Verfahren nach Anspruch 1, dadurch gekennzeichnet, daß der Silikatgehalt des Phosphors zu mindestens 96 Mol-% aus dem Oxyorthosilikat besteht.

3. Verfahren nach Anspruch 1 oder 2, dadurch gekennzeichnet, daß der Phosphor mit dreiwertigem Terbium in einem Atomverhältnis im 0,8-6,0-Bereich in bezug auf dessen gesamte Konzentration an Seltenerdmetallen aktiviert ist, und das bei der Phosphorherstellung verwendete molare $Gd_2O_3/SiO_2$-Verhältnis zwischen 1,03 und 1,50 liegt.

4. Verfahren nach irgendeinem der Ansprüche 1–3, dadurch gekennzeichnet, daß der Phosphor als ein Gemisch dieses terbiumaktivierten Gadoliniumoxyorthosilikats ($Gd_2SiO_5$) mit Gadoliniumoxid ($Gd_2O_3$) hergestellt wird, wobei der Gadoliniumoxid-Gehalt nicht größer ist als 56 Mol-%.

5. Röntgenstrahlen-Umwandlungsschirm, der wesentlich aus einem teilchenförmig in einer unterstützten oder selbsttragenden Bindemittelschicht dispergierten Phosphor besteht, wobei das Bindemittel organischer Natur ist, dadurch gekennzeichnet, daß der Phosphor ein terbiumaktiviertes Gadoliniumsilikat enthält, dessen Atomverhältnis von durch Terbium substituiertes Gadolinium zwischen 0,6 und 7,5 liegt, und das Silikat zu mindestens 90 Mol-% aus dem Oxyorthosilikat besteht.

6. Röntgenstrahlen-Umwandlungsschirm nach Anspruch 5, dadurch gekennzeichnet, daß der Silikatgehalt des Phosphors zu mindestens 96 Mol-% aus dem Oxyorthosilikat besteht.

7. Röntgenstrahlen-Umwandlungsschirm nach den Ansprüchen 5 und 6, dadurch gekennzeichnet, daß der Phosphor mit dreiwertigem Terbium in einem Atomverhältnis im 0,8–6,0-Bereich, bezogen auf dessen gesamte Seltenerdmetall-Konzentration, aktiviert ist, und das bei der Phosphorherstellung verwendete molare $Gd_2O_3/SiO_2$-Verhältnis zwischen 1,03 und 1,70 liegt.

8. Röntgenstrahlen-Umwandlungsschirm nach irgendeinem der Ansprüche 5–7, dadurch gekennzeichnet, daß der Phosphor in dispergierter Form in einem oder mehreren filmbildenden organischen Polymeren enthalten ist.

9. Röntgenstrahlen-Umwandlungsschirm nach irgendeinem der Ansprüche 5–8, dadurch gekennzeichnet, daß der Phosphor in dieser Schicht in einem Verhältnis im Bereich von 300 bis 750 g/m² verwendet wird.

10. Röntgenstrahlen-Umwandlungsschirm nach irgendeinem der Ansprüche 5–9, dadurch gekennzeichnet, daß der Phosphor eine Teilchengröße im Bereich von 0,1 bis 20 µm hat.

**Revendications**

1. Procédé pour la conversion de rayons X en lumière verte avec une substance luminescente qui, lors de l'exposition aux rayons X, émet une lumière dont le spectre est dominé par un groupe de lignes d'une intensité supérieure apparaissant entre 530 et 570 nm, caractérisé en ce que la substance luminescente comprend un silicate de gadolinium activé avec du terbium, le pourcentage atomique de terbium substitué au gadolinium se situant dans l'intervalle allant de 0,6 à 7,5, tandis que le silicate est constitué d'au moins 90% molaires d'oxyorthosilicate.

2. Procédé selon la revendication 1, caractérisé en ce que la teneur en silicate de la substance luminescente est constituée d'au moins 96% molaires d'oxyorthosilicate.

3. Procédé selon la revendication 1 ou 2, caractérisé en ce que la substance luminescente est activée avec du terbium trivalent dans un pourcentage atomique se situant dans l'intervalle allant de 0,8 à 6,0 vis-à-vis de sa concentration totale en métaux de terres rares, tandis que le rapport molaire de $Gd_2O_3/SiO_2$ utilisé dans la préparation de substances luminescentes se situe entre 1,03 et 1,50.

4. Procédé selon l'une quelconque des revendications 1 à 3, caractérisé en ce qu'on prépare la substance luminescente sous forme d'un mélange de l'oxyorthosilicate de gadolinium ($Gd_2SiO_5$) activé au terbium avec de l'oxyde de gadolinium ($Gd_2O_3$), la teneur en oxyde de gadolinium ne dépassant pas 56% molaires.

5. Ecran de conversion des rayons X, constitué essentiellement d'une substance luminescente dispersée sous forme de particules dans une couche d'agent liant déposée sur un support ou autoportante, l'agent liant étant d'une nature organique, caractérisé en ce que la substance luminescente comprend un silicate de gadolinium activé avec le terbium, le pourcentage atomique de terbium substitué au gadolinium se sitant dans l'intervalle allant de 0,6 à 7,5, tandis que le silicate est constitué d'au moins 90% molaires de l'oxyorthosilicate.

6. Ecran de conversion des rayons X selon la revendication 5, caractérisé en ce que la teneur en silicate de la substance luminescente est constituée pour au moins 96% molaires de l'oxyorthosilicate.

7. Ecran de conversion des rayons X selon les revendications 5 et 6, caractérisé en ce que la substance luminescente est activée avec du terbium trivalent dans un pourcentage atomique se situant dans l'intervalle allant de 0,8 à 6,0 vis-à-vis de sa concentration totale en métaux de terres rares, tandis que le rapport molaire $Gd_2O_3/SiO_2$ utilisé dans la préparation de substance luminescente se situe dans l'intervalle allant de 1,03 à 1,70.

8. Ecran de conversion des rayons X selon l'une quelconque des revendications 5 à 7, caractérisé en ce que la substance luminescente est dispersée sous forme d'un ou plusieurs polymères organiques filmogènes.

9. Ecran de conversion des rayons X selon l'une quelconque des revendications 5 à 8, caractérisé en ce que la substance luminescente de cette couche est appliquée à raison de 300 à 750 g/m².

10. Ecran de conversion des rayons X selon l'une quelconque des revendications 5 à 9, caractérisé en ce que la substance luminescente est en particules d'une granularité se sitant dans l'intervalle allant de 0,1 à 20 µm.

FIG. 1

EP 0 249 660 B1

FIG. 2

FIG. 3